# EUROPÄISCHE PATENTSCHRIFT

(11) **EP 3 194 801 B1**
(45) Veröffentlichungstag und Bekanntmachung des Hinweises auf die Patenterteilung: **20.05.2020**
(21) Anmeldenummer: 15754235.8
(22) Anmeldetag: 27.08.2015
(51) Int. Cl.: F16D 55/00, F16D 55/02

(54) **ANORDNUNG EINES BREMSTRÄGERS EINER SCHEIBENBREMSE AN EINER FAHRZEUGACHSE, BREMSTRÄGER UND SCHEIBENBREMSE**
ARRANGEMENT OF A BRAKE CARRIER OF A DISC BRAKE ON A VEHICLE AXLE, BRAKE CARRIER, AND DISC BRAKE
SYSTÈME DE FLASQUE DE FREIN D'UN FREIN À DISQUE SUR UN ESSIEU DE VÉHICULE, FLASQUE DE FREIN ET FREIN À DISQUE

(30) Priorität: 17.09.2014 DE 102014113369
(43) Veröffentlichungstag der Anmeldung: 26.07.2017
(73) Patentinhaber: KNORR-BREMSE Systeme für Nutzfahrzeuge GmbH, 80809 München (DE)
(72) Erfinder: FISCHL, Tobias, 80336 München (DE); PRITZ, Wolfgang, 80637 München (DE)
(86) Internationale Anmeldenummer: PCT/EP2015/069575
(87) Internationale Veröffentlichungsnummer: WO 2016/041752

(56) Entgegenhaltungen:
- CN-A- 1 865 727
- DE-A1-102012 006 110
- US-A- 4 002 226

## Beschreibung

Die vorliegende Erfindung betrifft eine Anordnung eines Bremsträgers einer Scheibenbremse an einer Fahrzeugachse, insbesondere eines Nutzfahrzeugs, gemäß dem Oberbegriff des Anspruchs 1 sowie eine Scheibenbremse.

Gattungsgemäße Bremsträger für Scheibenbremsen sind in zahlreichen Ausführungsvarianten aus dem Stand der Technik bekannt, beispielsweise aus der DE 10 2007 013670A1 oder der DE 10 2008 003 526A1. Die dort beschriebenen Bremsträger weisen über Streben miteinander verbundene Bremsträgerhörner auf, wobei die Streben parallel und abständig zu den Bremsfläche einer Bremsscheibe verlaufen.

Beim Betätigen der Scheibenbremse wird die Bremskraft über eine Zuspanneinheit auf die Bremsbeläge übertragen, dabei gegen die Reibfläche einer Bremsscheibe gedrückt werden.

Die Zuspanneinheit wird dabei in Richtung der Bremsscheibe bewegt. Soweit sich ein zuspannseitiger Bremsbelag in Kontakt mit der Bremsscheibe befindet, wird durch die dabei entstehende Gegenkraft der Bremssattel zusammen mit einem auf der gegenüberliegenden Seite der Bremsscheibe angeordneten, sattelrückseitigen Bremsbelag auf die Bremsscheibe hin verschoben.

Sobald auch der sattelrückseitige Bremsbelag beim Bremsvorgang die Bremsscheibe berührt, wird eine Bremswirkung erzeugt.

Zur Sicherstellung eines konstanten Luftspiels zwischen den Bremsbelägen und der Reibfläche der Bremsscheibe wird dieser Zustand bei zunehmendem Verschleiß der Bremsbeläge weiter ausgefahren.

Die aus der Bremswirkung resultierenden Reaktionskräfte werden dabei über die Bremsbeläge auf den Bremsträger geleitet, wobei die Bremsbeläge über einen auslaufseitigen Bremsträgerhörnern abgestützt werden.

Der Bremsträger ist üblicherweise ein einteiliges Gussteil, zumeist aus Sphäro Guss. Grundlegende Funktionsflächen dieses Bremsträgers sind dabei jeweilige Fixierbereiche zur Befestigung des Bremsträgers an der Fahrzeugsachse, üblicherweise Anschraubflächen, möchten den Bremsträger mit der Fahrzeugachse bzw. einem Achsflansch verbinden, sowie Auflageflächen zur Abstützung der Bremsbeläge, über die die Bremsbeläge positioniert werden und über die Bremsträgerhörner die Umfangskräfte abgestützt werden.

Zur Stabilisierung des Bremsträgers sind desweiteren die parallel zueinander verlaufenen Streben vorgesehen, die die Auflageflächen für die Bremsbeläge miteinander verbinden und den Bremsträger stabilisieren.

Aus der DE 10 2012 006 110 A1 ist ein mehrteilig ausgeführter Bremsträger bekannt, bei dem die parallel zueinander verlaufenen Streben Teil eines Grundkörpers des Bremsträgers sind, auf dem Trägerhörner aufsteckbar sind.

Aus der CN 1 865 727 A ist ebenfalls ein mehrteilig ausgeführter Bremsträger bekannt, bei dem ein Grundkörper eine von der Einlaufseite zur Auslaufseite verlaufende Strebe aufweist, wobei an den Enden des Grundkörpers Trägerschienen zur Halterung von Bremsbelägen aufsteckbar sind.

Aus der US 4 002 226 A ist eine Scheibenbremse mit einem Bremsträger bekannt, bei dem ebenfalls sich axial über die Bremsscheibe erstreckende Schienen eines Bremsträgers über eine Strebe des Bremsträgers miteinander verbunden sind.

Eine solche Anordnung eines Bremsträgers an einer Fahrzeugachse hat sich an sich bewährt. Allerdings sind die Bremsträger in der Herstellung relativ kostenaufwändig, da insbesondere die Streben zwischen den Bremsträgerhörnern bzw. den Auflageflächen sehr genau bearbeitet werden müssen, um einen Verzug durch Schneiddruck oder Verspannen bei der spanenden Bearbeitung der einzelnen Funktionsflächen möglichst zu vermeiden.

Aufgabe der vorliegenden Erfindung ist es, eine Anordnung eines Bremsträgers an einer Fahrzeugachse sowie einen Bremsträger und eine Scheibenbremse bereitzustellen, der bzw. die bei gleicher Stabilität kostengünstiger herstellbar ist.

Diese Aufgabe wird durch eine Anordnung eines Bremsträgers einer Scheibenbremse an einer Fahrzeugachse mit den Merkmalen des Anspruchs 1 sowie durch eine Scheibenbremse mit den Merkmalen des Anspruchs 4 gelöst.

Bei der erfindungsgemäßen Anordnung eines Bremsträgers an einer Fahrzeugachse weist der Bremsträger einen Fixierbereich zur Befestigung des Bremsträgers an der Fahrzeugachse, jeweilige Auflageflächen zur radialen Abstützung wenigstens eines Bremsbelags sowie jeweilig auslaufseitige Trägerhörner auf, an denen wenigstens ein zwischen einem ein- und einem auslaufseitigen Trägerhorn eingesetztem Bremsbelag abstützbar ist, wobei der Bremsträger wenigstens zweiteilig aus einem einlaufseitig angeordneten ersten Bremsträgerteil und einem auslaufseitig angeordneten zweiten Bremsträgerteil ausgebildet ist, wobei beide wenigstens zwei Bremsträgerteile an einem Fahrzeugachsteil formschlüssig befestigt und über das Fahrzeugachsteil miteinander verbunden sind. An den Fixierbereichen der Bremsträgerteile sind winklig zur Längsrichtung der Fahrzeugachse sich auf der den Trägerhörnern abgewandten Unterseite sich erstreckende Aufnahmenuten angeformt, in denen entsprechend sich winklig zur Längsrichtung der Fahrzeugachse auf einer den Bremsträgerteilen zugewandten Oberseite Fahrzeugachsteils angeformte erstreckende Stege aufgenommen sind. Alternativ sind an den Fixierbereichen der Bremsträgerteile winklig zur Längsrichtung der Fahrzeugachse sich auf der den Trägerhörnern abgewandten Unterseite sich erstreckende Stege angeformt, die in entsprechend sich winklig zur Längsrichtung der Fahrzeugachse auf einer den Bremsträgerteilen zugewandten Oberseite Fahrzeugachsteils angeformte erstreckende Aufnahmenuten aufgenommen sind.

Die wenigstens zweiteilige Ausgestaltung des Bremsträgers ermöglicht den Wegfall der Streben zwischen den Trägerhörnern. Dadurch kann bei der Rohteilerstellung des Bremsträgers über ein Gießverfahren die Plattenbelegung vergrößert werden und damit die Ausbringung bei gleicher Taktzeit erhöht werden.

Außerdem wird die spanende Verarbeitung der Funktionsflächen wesentlich einfacher und kostengünstiger, da der Verzug durch Schneiddruck oder Verspannen deutlich geringer ausfällt als bei der spanenden Bearbeitung herkömmlicher Bremsträger. Die Stabilisierung des Bremsträgers wird hier über die Montage an dem Fahrzeugachsteil gewährleistet.

Entsprechendes gilt für die erfindungsgemäße Scheibenbremse.

Als einlaufseitiges Trägerhorn wird dabei das in einer Hauptdrehrichtung der Bremsscheibe, also der Drehrichtung der Bremsscheibe während einer Vorwärtsfahrt des Kraftfahrzeugs, hintere Trägerhorn bezeichnet.

Ein Formschluss ist insbesondere bei durch ein Gießverfahren hergestellten Bauteilen einfach und kostengünstig einbringbar.

Vorteilhafte Ausführungsvarianten der Erfindung sind Gegenstand der Unteransprüche.

Um bei dem Formschluss sowohl Längs- als auch Querkräfte gut aufnehmen zu können, sind die Stege und die Aufnahmenuten gemäß einer weiteren bevorzugten Ausführungsvariante in einem Winkel von 30° bis 150°, insbesondere 80° bis 100° zueinander ausgerichtet.

Nach einer weiteren bevorzugten Ausführungsvariant sind die Bremsträgerteile mit dem Fahrzeugachsteil verschraubbar, was die Stabilität der Anordnung der Bremsträger am Fahrzeugachsteil zusätzlich erhöht.

Nachfolgend wird eine bevorzugte Ausführungsvariante der Erfindung anhand der beiliegenden Zeichnungen näher erläutert. Es zeigen:
- Figur 1: eine perspektivische Ansicht eines aus dem Stand der Technik bekannten Bremsträgers,
- Figur 2: eine perspektivische Ansicht einer Ausführungsvariante eines erfindungsgemäßen Bremsträgers, angeordnet an einem Fahrzeugachsteil,
- Figur 3: eine perspektivische Ansicht einer Scheibenbremse mit einer alternativen Ausführungsvariante eines erfindungsgemäßen Bremsträgers,
- Figur 4: eine schematische perspektivische Ansicht eines Bremsträgerteils zur axialen Anbindung an ein Fahrzeugachsteil.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsträgers, der Trägerhörner, des Fahrzeugachsteils und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

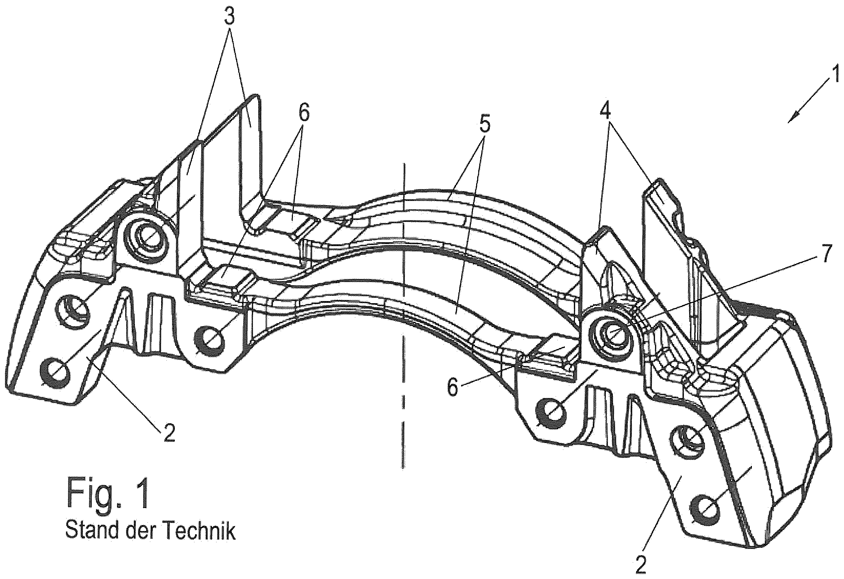

In Figur 1 ist ein Bremsträger gemäß dem Stand der Technik dargestellt, der insgesamt mit dem Bezugszeichen 1 versehen ist.

Der Bremsträger 1 weist einen Fixierbereich 2 auf zum Einbringen von Schrauben, mit denen der Bremsträger 1 an einer Fahrzeugachse verschraubt werden kann.

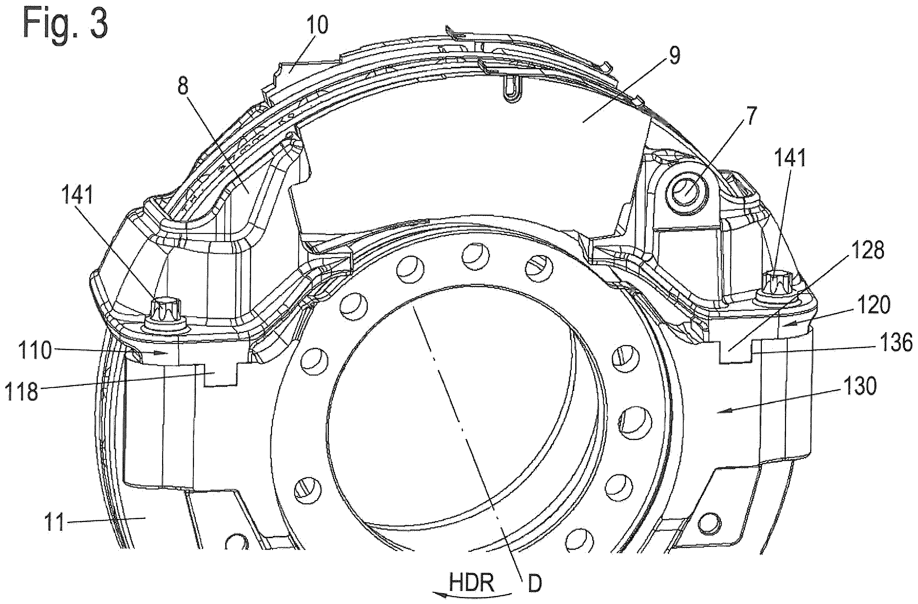

Von dem Fixierbereich radial nach oben erstrecken sich Bremsträgerhörner 3,4, zwischen denen parallel und abständig zueinander verlaufende Streben 5 angeformt sind, wobei zwischen den parallel zueinander verlaufenden Streben 5 ein Kreisringabschnitt einer Bremsscheibe 11, gezeigt in Figur 3, aufgenommen ist.

Zwischen den Streben 5 und dem jeweiligen Bremsträgerhörnern 3,4 ist desweiteren eine Auflagefläche 6 zu erkennen, auf der im eingebauten Zustand (nicht dargestellte) Bremsbeläge aufliegen, die radial nach unten durch die Auflageflächen 6 abgestützt werden und in Umfangsrichtung sich an den Trägerhörnern 3,4 abstützen.

Die zuspannseitigen Bremsträgerhörner 3,4 sind desweiteren mit einer Bohrung 7 versehen, in die jeweilige Schrauben einführbar sind zur Fixierung eines auf den Bremsträger 1 aufgesetzten Bremssattels.

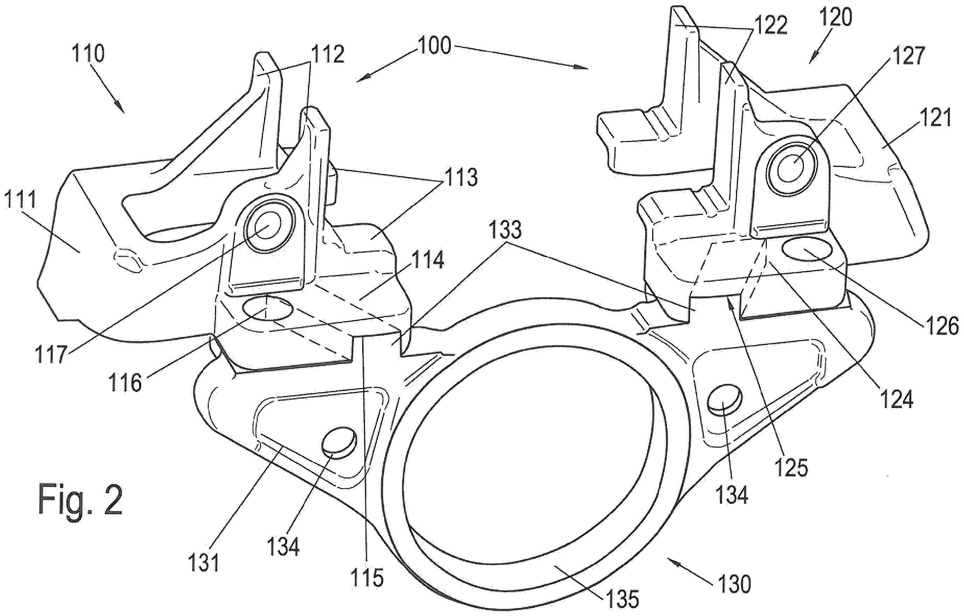

Eine Ausführungsvariante eines erfindungsgemäßen Bremsträgers ist in Figur 2 insgesamt mit den Bezugszeichen 100 versehen.

Wie in Figur 2 gut zu erkennen ist, besteht der Bremsträger 100 im Wesentlichen aus zwei Bremsträgerteilen110, 120, nämlich einem einlaufseitig angeordneten ersten Bremsträgerteil 110 und einem auslaufseitig angeordneten zweiten Bremsträgerteil 120.

Als einlaufseitiges Bremsträgerteil 110 ist dabei das in einer Hauptdrehrichtung HDR der Bremsscheibe 11 (gezeigt in Figur 3), also der Drehrichtung der Bremsscheibe11 während einer Vorwärtsfahrt des Kraftfahrzeugs, hintere Bremsträgerteil 110 bezeichnet. Das auslaufseitig angeordnete zweite Bremsträgerteil 120 wird entsprechend das in der Hauptdrehrichtung HDR der Bremsscheibe 11 vordere Bremsträgerteil 120 bezeichnet.

Anstelle der Streben 5 (Figur 1) sind die beiden Bremsträgerteile 110,120 an einem Fahrzeugachsteil 130 abständig voneinander befestigt und über dieses Fahrzeugachsteil 130 miteinander verbunden.

Jedes der Bremsträgerteile 110, 120 weist ebenfalls jeweilige Bremsträgerhörner 112, 122 auf.

In dem Zwischenraum zwischen den einander gegenüberliegenden Bremsträgerhörnern 112, 122 der sich gegenüberstehenden Bremsträgerteile 110,120 in Umfangsrichtung einer (nicht gezeigten) Bremsscheibe erstrecken sich jeweilige Auflageflächen 113, 123 zur radialen Abstützung von bevorzugt beidseitig der Bremsscheibe angeordneten Bremsbelägen 9, 10 (gezeigt in Figur 3).

Jedes der Bremsträgerteile 110,120 weist dabei eine u-förmige Ausnehmung zur Aufnahme der Bremsscheibe auf, sodass jedes der Bremsträgerteile 110, 120 jeweils zwei solcher Trägerhörner 112, 122 zur Abstützung jeweiliger Bremsbeläge 9, 10 aufweist.

Denkbar ist auch eine Ausführungsvariante eines Bremsträgers mit einem einlaufseitigen und einem auslaufseitigem Bremsträgerteil mit jeweils nur einem Trägerhorn zur Abstützung lediglich eines Bremsbelages.

Die beiden Trägerhörner 112, 122 eines Bremsträgerteils 110,120 der hier gezeigten Ausführungsvariante sind über ein Brückenstück 11, 121 miteinander verbunden, so dass die Bremsträgerteile 110,120 von in der Draufsicht u-förmiger Gestalt sind.

Neben der Zuspannseite der Bremsträgerteile 110, 120 erstreckt sich ein Fixierbereich 114, 124 zur Befestigung der Bremsträgerteile 110,120 an dem Fahrzeugachsteil 130.

Dieser Fixierbereich 114,124 ist dabei im Wesentlichen als zu den Auflageflächen 113,123 paralleles, insbesondere stufig versetztes Plattenstück ausgebildet.

Wie in der in Figur 2 gezeigten Ausführungsvariante zu erkennen ist, sind auf der den Trägerhörnern 112, 122 abgewandten Unterseite der Fixierbereiche 114,124 Aufnahmenuten 115,125 angeformt, in denen entsprechend auf einer dem Bremsträgerteil 110,120 zugeordneten Oberseite des Fahrzeugachsteils 130 angeformte Stege 133 aufgenommen sind, so dass die Bremsträgerteile 110,120 durch das Ineinandergreifen der Stege mit den Aufnahmenuten 115,125 formschlüssig an dem Fahrzeugachsteil 130 befestigt sind.

In der in Figur 3 gezeigten Ausführungsvariante sind auf der den Trägerhörnern 112, 122 abgewandten Unterseite der Fixierbereiche 114,124 Stege 118,128 angeformt, die in entsprechend auf einer dem Bremsträgerteil 110,120 zugeordneten Oberseite des Fahrzeugachsteils 130 angeformten Aufnahmenuten 136 aufgenommen sind, so dass die Bremsträgerteile 110,120 durch das Ineinandergreifen der Stege 118, 128 mit den Aufnahmenuten 136 formschlüssig an dem Fahrzeugachsteil 130 befestigt sind.

Um eine formschlüssig stabile Fixierung der Bremsträgerteile 110,120 an dem Fahrzeugachsteil 130 zu erreichen, sind die Aufnahmenuten 115,125, 136 der Bremsträgerteile 110,120 sowie die am Fahrzeugachsteil 130 angeformten Stege 133, 118, 128 winklig zueinander und zur Längsrichtung A der Fahrzeugachse orientiert.

Die Stege 133, 118, 128 und die Aufnahmenuten 115,125, 136 stehen dabei bevorzugt in einem Winkel α von 30° bis 150°, besonders bevorzugt von 80° bis 100° zueinander.

Anstelle der formschlüssigen Anbindung der Bremsträgerteile 110, 120 mit dem Fahrzeugachsteil 130 über Stege 133, 118, 128 und Aufnahmenuten 115,125, 136 ist es ebenso denkbar, an den Bremsträgerteilen 110, 120 bzw. dem Fahrzeugachsteil 130 Passtifte und entsprechende Bohrungen oder Passfedern oder dergleichen zur formschlüssigen Anbindung der Bremsträgerteile 110, 120 mit dem Fahrzeugachsteil 130 anzubringen.

Neben den Aufnahmenuten 115,125 oder Stegen 118, 128 sind an den Bremsträgerteilen 110,120 desweiteren bevorzugt Aufnahmebohrungen 116,126 im Fixierbereich 114,124 vorgesehen, in die Schrauben oder Bolzen einsteckbar sind, in die das Achsteil 130 mit den Bremsträgerteilen 110, 120 zusätzlich befestigt, insbesondere verschraubt werden können.

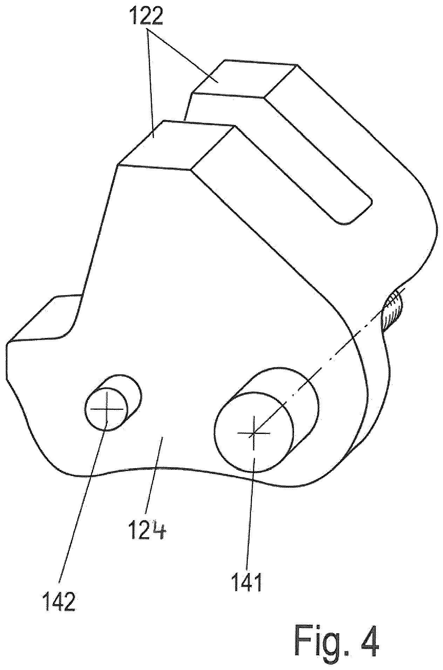

In einer weiteren Ausführungsvariante, gezeigt in Figur 4, ist der Fixierbereich 114, 124 zur Befestigung der Bremsträgerteile 110,120 an dem Fahrzeugachsteil 130 nicht als zu den Auflageflächen 113,123 paralleles, sondern zur Reibfläche der Bremsscheibe 11 paralleles Plattenstück ausgebildet zur Ausbildung einer parallel zur Drehachse D der Bremsscheibe 11 axialen Anbindung der Bremsträgerteile 110,120 an dem Fahrzeugachsteil 130 .

Die Anbindung der Bremsträgerteile 110,120 an das Fahrzeugachsteil 130 erfolgt dabei bevorzugt über Aufnahmebohrungen im Fixierbereich 114,124, in die Schrauben 141 oder Bolzen und Passtifte 142 oder Passfedern einsteckbar sind, mit denen das Achsteil 130 mit den Bremsträgerteilen 110, 120 befestigbar ist.

Denkbar ist der Weiteren eine Anbindung der Bremsträgerteile 110,120 an das Fahrzeugachsteil 130 winklig, insbesondere radial zur Drehachse D der Bremsscheibe 11, wobei der Fixierbereich 114, 124 zur Befestigung der Bremsträgerteile 110,120 an dem Fahrzeugachsteil 130 bei dieser Ausgestaltung eine sich etwa tangential zur Drehachse D der Bremsscheibe 11 und in Längsrichtung der Drehachse D der Bremsscheibe 11 erstreckende Anlagefläche aufweist, die an einer sich parallel zu dieser an dem Fahrzeugachsteil 130 angeformten Anlagefläche anliegt, wobei die beiden Anlagefläche aneinander befestigbar, insbesondere miteinander verschraubt, sind.

An den zuspannseitigen Trägerhörnern 112,122 ist desweiteren vorzugsweise eine Aufnahmebohrung 117,127 zur Fixierung eines am Bremsträger 100 befestigbaren Bremssattels 8 angeformt.

Das Fahrzeugsachsteil 130 weist im Wesentlichen eine ringförmige Aufnahme 135 auf, durch die sich im eingebauten Zustand eine Fahrzeugachse erstreckt. An der ringförmigen Aufnahme 135 sind jeweilige Fixierflächen 131, 132 angeformt. Die Fixierflächen 131, 132 sind senkrecht zur Längsachse A der Fahrzeugachse etwa dreieckig geformt und weisen vorzugsweise jeweilige Bohrungen 134 zur Verschraubung des Fahrzeugachsteils 130 an der Fahrzeugachse auf.

An der oberen, den Bremsträgerteilen 110, 120 zugewandten Stirnfläche, die sich zusätzlich in Längsrichtung A der Fahrzeugachse erstreckt sind, wie oben bereits erwähnt, winklig zur Längsrichtung A der Fahrzeugachse ausgerichtete Stege 133 angeformt, die formschlüssig in den Aufnahmenuten 115,125 der Bremsträgerteile 110,120 aufgenommen sind.

Durch die Verbindung der Bremsträgerteile 110,120 mit dem Fahrzeugachsteil 130 sind die Bremsträgerteile 110, 120 derart stabilisiert, dass die aus dem Stand der Technik bekannten Bremsträger mit in Umfangsrichtung der Bremsscheibe sich erstreckenden Stege entfallen können.

### Bezugszeichenliste

- 1: Bremsträger
- 2: Fixierbereich
- 3.: Bremsträgerhorn
- 4: Bremsträgerhorn
- 5: Streben
- 6: Auflagefläche
- 7: Bohrung
- 8: Bremssattel
- 9: Bremsbelag
- 10: Bremsbelag
- 11: Bremsscheibe

- 100: Bremsträger

- 110: Bremsträgerteil
- 111: Brückenstück
- 112: Bremsträgerhörner
- 113: Auflagefläche
- 114: Fixierbereich
- 115: Aufnahmenut
- 116: Aufnahmebohrung
- 117: Aufnahmebohrung
- 118: Steg

- 120: Bremsträgerteil
- 121: Brückenstück
- 122: Bremsträgerhörner
- 123: Auflagefläche
- 124: Fixierbereich
- 125: Aufnahmenuten
- 126: Aufnahmebohrung
- 127: Aufnahmebohrung
- 128: Steg

- 130: Fahrzeugachsteil
- 131: Fixierfläche
- 132: Fixierfläche
- 133: Steg
- 134: Bohrungen
- 135: Aufnahme
- 136: Aufnahmenut

- A: Längsrichtung der Fahrzeugachse
- α: Winkel zwischen Stegen bzw. Aufnahmenuten
- HDR: Hauptdrehrichtung der Bremsscheibe (bei Vorwärtsfahrt)
- D: Drehachsse der Bremsscheibe

## Patentansprüche

1. Anordnung eines Bremsträgers (100) einer Scheibenbremse an einer Fahrzeugachse, insbesondere eines Nutzfahrzeugs, wobei der Bremsträger (100) einen Fixierbereich (114, 124) zur Befestigung des Bremsträgers (100) an der Fahrzeugachse, jeweilige Auflageflächen (113, 123) zur radialen Abstützung wenigstens eines Bremsbelags sowie jeweilige ein- und auslaufseitige Trägerhörner (112, 122) aufweist, an denen der wenigstens eine zwischen einem ein- und einem auslaufseitigen Trägerhorn (112, 122) eingesetzte Bremsbelag abstützbar ist, wobei der Bremsträger (100) wenigstens zweiteilig aus einem einlaufseitig angeordneten ersten Bremsträgerteil (110) und einem auslaufseitig angeordneten zweiten Bremsträgerteil (120) ausgebildet ist, **dadurch gekennzeichnet, dass** die wenigstens zwei Bremsträgerteile (110) an einem Fahrzeugachsteil (130) formschlüssig befestigt und über das Fahrzeugachsteil (130) miteinander verbunden sind, wobei an den Fixierbereichen (114, 124) der Bremsträgerteile (110, 120) winklig zur Längsrichtung (A) der Fahrzeugachse sich auf der den Trägerhörnern (112, 122) abgewandten Unterseite sich erstreckende Aufnahmenuten (115, 125) angeformt sind, in denen entsprechend winklig zur Längsrichtung (A) der Fahrzeugachse sich auf einer den Bremsträgerteilen (110, 120) zugewandten Oberseite des Fahrzeugachsteils (130) angeformte erstreckende Stege (133) aufgenommen sind oder wobei an den Fixierbereichen (114, 124) der Bremsträgerteile (110, 120) winklig zur Längsrichtung (A) der Fahrzeugachse sich auf der den Trägerhörnern (112, 122) abgewandten Unterseite sich erstreckende Stege (118, 128) angeformt sind, die in entsprechend winklig zur Längsrichtung (A) der Fahrzeugachse sich erstreckenden, auf einer den Bremsträgerteilen (110, 120) zugewandten Oberseite des Fahrzeugachsteils (130) angeformten Aufnahmenuten (136) aufgenommen sind.

2. Anordnung nach Anspruch 1, **dadurch gekennzeichnet, dass** die Stege (133, 118, 128) und die Aufnahmenuten (115, 125, 136) in einem Winkel (a) von 30° bis 150°, insbesondere von 80° bis 100° zueinander ausgerichtet sind.

3. Anordnung nach einem der vorhergehenden Ansprüche, **dadurch gekennzeichnet, dass** die Bremsträgerteile (110, 120) mit dem Fahrzeugachsteil (130) verschraubbar sind.

4. Scheibenbremse eines Kraftfahrzeugs, insbesondere eines Nutzfahrzeugs, aufweisend einen eine Bremsscheibe (11) übergreifender Bremssattel (8), einen Bremsträger (100) mit ein- und auslaufseitig angeordneten Trägerhörnern (112, 122), wenigstens einen in dem Bremsträger (10) aufgenommenen Bremsbelag (9), **dadurch gekennzeichnet, dass** der Bremsträger (100) gemäß einem der Ansprüche 1 bis 3 an einer Fahrzeugachse, insbesondere eines Nutzfahrzeugs, angeordnet ist.

## Claims

1. An arrangement of a brake carrier (100) of a disc brake on a vehicle axle, in particular of a utility vehicle, the brake carrier (100) having a fixing region (114, 124) for fastening the brake carrier (100) to the vehicle axle, contact surfaces (113, 123) for radially supporting at least one brake pad, and run-in-side and run-out-side brake horns (112, 122), on which the at least one brake pad inserted between the run-in side and run-out side brake horns (112, 122) can be supported, the brake carrier (100) being made up of at least two parts, i.e. a first brake carrier part (110) arranged on the run-in side and a second brake carrier part (120) arranged on the run-out side, **characterised in that** the at least two brake carrier parts (110) are fastened in a form fit to a vehicle axle part (130) and are connected together by the vehicle axle part (130), there being formed in the fixing regions (114, 124) of the brake carrier parts (110, 120) at an angle to the longitudinal direction (A) of the vehicle axle receiving grooves (115, 125) that extend along the underside facing away from the carrier horns (112, 122), in which are received correspondingly at an angle to the longitudinal direction (A) of the vehicle axle webs (133), which are in turn formed on and extend along a top of the vehicle axle part (130) facing the brake carrier parts (110, 120), **or** there being formed in the fixing regions (114, 124) of the brake carrier parts (110, 120) at an angle to the longitudinal direction (A) of the vehicle axle webs (118, 128) that extend along the underside facing away from the carrier horns (112, 122), which are in turn received in receiving grooves (136) that extend correspondingly at an angle to the longitudinal direction (A) of the vehicle axle and are formed on a top of the vehicle axle part (130) facing the brake carrier parts (110, 120).

2. An arrangement according claim 1, **characterised in that** the webs (133, 118, 128) and the receiving grooves (115, 125, 136) are oriented at an angle (α) of 30° to 150°, in particular 80° to 100°, in relation to one another.

3. An arrangement according to any one of the preceding claims, **characterised in that** the brake carrier parts (110, 220) can be screwed to the vehicle axle part (130).

4. A disc brake of a motor vehicle, in particular a utility vehicle, having a brake calliper (8) straddling a brake disc (11), a brake carrier (100) having carrier horns (112, 122) arranged on the run-in side and the run-out side, at least one brake pad (9) received in the brake carrier (10), **characterised in that** the brake carrier (100) is arranged on a vehicle axle, in particular of a utility vehicle, according to any one of claims 1 to 3.

## Revendications

1. Agencement d'un flasque (100) d'un frein à disque sur un essieu de véhicule, notamment d'un véhicule utilitaire, dans lequel le flasque (100) de frein a une région (114, 124) d'immobilisation pour la fixation du flasque (100) de frein sur l'essieu du véhicule, des surfaces (113, 123) respectives d'application pour l'appui radial d'au moins une garniture de frein, ainsi que des cornes (112, 122) de flasque respectives du côté de l'entrée et de la sortie, sur lesquelles la au moins une garniture de frein, insérée entre une corne (112) du flasque du côté de l'entrée et une corne (122) du flasque du côté de la sortie, peut être appuyée, le flasque (100) de frein étant constitué en au moins deux parties, composées d'une première partie (110) de flasque de frein disposée du côté de l'entrée et d'une deuxième partie (120) de flasque de frein disposée du côté de la sortie, **caractérisé en ce que** les au moins deux parties (110) du flasque de frein sont fixées à complémentarité de forme à une partie (130) d'essieu du véhicule et sont reliées l'une à l'autre par la partie (130) d'essieu du véhicule, dans lequel, sur les régions (114, 124) d'immobilisation des parties (110, 120) du flasque de frein viennent de matière, en faisant un angle par rapport à la direction (A) longitudinale de l'essieu du véhicule, des rainures (115, 125) de réception s'étendant du côté inférieur loin des cornes (112, 122) du flasque, rainures dans lesquelles sont reçues, de manière correspondante, des nervures (133) s'étendant en faisant un angle par rapport à la direction (A) longitudinale de l'essieu du véhicule sur un côté supérieur, tourné vers les parties (110, 120) du flasque de frein, de la partie (130) de l'essieu du véhicule ou dans lequel, sur les régions (114, 124) d'immobilisation des parties (110, 120) du flasque de frein viennent de matière en faisant un angle avec la direction (A) longitudinale de l'essieu du véhicule, des nervures (118, 128) s'étendant sur le côté inférieur loin des cornes (112, 122) du flasque, nervures, qui sont reçues d'une manière correspondante dans des rainures (136) de réception venant de matière sur un côté supérieur, tourné vers les parties (110, 120) du flasque de frein, de la partie (130) d'essieu du véhicule.

2. Agencement suivant la revendication 1, **caractérisé en ce que** les nervures (133, 118, 128) et les rainures (115, 125, 136) de réception font, les unes par rapport aux autres, un angle α de 30° à 150°, notamment de 80° à 100°.

3. Agencement suivant l'une des revendications précédentes, **caractérisé en ce que** les parties (110, 120) du flasque de frein peuvent être vissées à la partie (130) d'essieu du véhicule.

4. Frein à disque d'un véhicule automobile, notamment d'un véhicule utilitaire, comportant un étrier (8) de frein enjambant un disque (11) de frein, un flasque (100) de frein ayant des cornes (112, 122) de flasque disposées du côté de l'entrée et du côté de la sortie, au moins une garniture (9) de frein reçue dans le flasque (10) de frein, **caractérisé en ce que** le flasque (100) de frein est monté suivant l'une des revendications 1 à 3 sur un essieu du véhicule, notamment d'un véhicule utilitaire.
